# EUROPÄISCHE PATENTANMELDUNG

(11) **EP 4 148 186 A1**
(43) Veröffentlichungstag der Anmeldung: **15.03.2023**
(21) Anmeldenummer: 22205900.8
(22) Anmeldetag: 12.12.2018
(51) Int. Cl.: E02D 27/42, F03D 13/20

(54) **FUNDAMENT FÜR EINE WINDKRAFTANLAGE**

(30) Priorität: 13.12.2017 DE 102017011505; 29.05.2018 DE 102018112857
(62) Teilanmeldung aus: 18833173.0
(71) Anmelder: Smart & Green Mukran Concrete GmbH, 18546 Sassnitz (DE)
(72) Erfinder: Prass, Gregor, 22455 Hamburg (DE); Schriefer, Christoph, 19230 Redefin (DE)
(74) Vertreter: Klickow & Wetzel PartGmbB

(57) **Zusammenfassung**

Die Erfindung betrifft ein Fundament für eine Windkraftanlage, wobei das Fundament (10) im Wesentlichen vorgefertigte Elemente , bevorzugt aus bewehrtem Beton, aufweist, mit einem ersten, sich vertikal erstreckenden sockelartig ausgeführten Abschnitt (11), auf dem ein Turm der Windkraftanlage anordbar ist, und einem zweiten sich im Wesentlichen horizontal erstreckenden Abschnitt (12) als Fundamentkörper, der sich in Kontakt mit dem Boden (100) befindet, wobei der erste Abschnitt (11) oberhalb des zweiten Abschnitts (12) angeordnet ist und wenigstens ein geschlossenes Sockelelement (14) aufweist, das ringförmig oder polygonal ausgeführt ist, und wobei der zweite Abschnitt (12) aus wenigstens zwei Horizontalelementen (22) gebildet ist, die jeweils wenigstens einen Sockelabschnitt (25) aufweisen, wobei das wenigstens eine Sockelelement (14) des ersten Abschnitts (11) und der Sockelabschnitt (25) des Horizontalelements (22) des zweiten Abschnitts (12) im Wesentlichen vertikale Durchbrüche (18) aufweisen, die montiert miteinander fluchten, in denen im Wesentlichen vertikale Verspannelemente (19) bevorzugt Gewindestangen, angeordnet sind. Dabei ist vorgesehen, dass ein weiterer sich vertikal erstreckender sockelartig ausgeführten Abschnitt (13) vorgesehen ist, der unterhalb des zweiten Abschnitts (12) angeordnet ist und wenigstens ein geschlossenes Sockelelement (14) aufweist, und dass der weitere Abschnitt (13) für den Abtrag der Lasten der Windkraftanlage erforderlich ist.

## Beschreibung

Die Erfindung betrifft ein Fundament für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, und einem zweiten sich im Wesentlichen horizontal erstreckenden Abschnitt als Fundamentkörper, der sich in Kontakt mit dem Boden befindet, wobei der erste Abschnitt oberhalb des zweiten Abschnitts angeordnet ist und wenigstens ein geschlossenes Sockelelement, bevorzugt hülsenförmig, aufweist, das ringförmig oder polygonal ausgeführt ist, und wobei der zweite Abschnitt aus wenigstens zwei Horizontalelementen gebildet ist, die jeweils wenigstens einen Sockelabschnitt aufweisen, wobei das wenigstens eine Sockelelement des ersten Abschnitts und der Sockelabschnitt des Horizontalelements des zweiten Abschnitts im Wesentlichen vertikale Durchbrüche aufweisen, die montiert miteinander fluchten, in denen im Wesentlichen vertikale Verspannelemente, bevorzugt Gewindestangen, angeordnet sind.

Fundamente für Windkraftanlagen werden im Wesentlichen als In-Situ-Betonfundamente ausgeführt. Dafür wird am Errichtungsort eine Grube ausgehoben, diese wird mit einer Sauberkeitsschicht versehen. Anschließend werden die Schalung und die Bewehrung errichtet und das Ganze mit Beton vor Ort gefüllt. Dabei wird ein flächiger Körper ggf. mit einem Sockel errichtet, siehe beispielsweise US 20160369520 A1 oder WO 2008/036934 A2. Neben dem Transportaufwand durch die der Lieferung des Betons der Schalung und der Bewehrung ist dieses vor Ort sehr arbeitsintensiv. Aus ist die Qualitätssicherung aufwendig bzw. je nach Witterung auch problembehaftet. Weiterhin ist der Rückbau nach dem Ende der Lebensdauer der Windkraftanlage teuer und sehr aufwendig.

Daher gibt es prinzipiell Bedarf, Fundamente von Windkraftanlagen aus vorgefertigten Elementen zu errichten, womit die vorgenannten Probleme reduziert bzw. eliminiert werden könnten. Prinzipiell ist vorteilhaft, dass bei einem Vorfertigen die Bauteile unter definierten Bedingungen standardisiert produziert werden können. Auch reduziert sich der Arbeitsaufwand vor Ort. Hierfür wurden verschiedene Ansätze im Stand der Technik beschrieben.

Beispielsweise zeigt WO 2008/036934 A2 eine Kombination aus vorgefertigten Elementen und klassischem Schalungs-/Bewehrungsbau. Dadurch werden die zuvor genannten Nachteile nur unwesentlich reduziert.

Weitere Ansätze für das Herstellen von Fundamenten für Windkraftanlagen aus vorgefertigten Bauteilen sind wie folgt im Stand der Technik gezeigt:
EP 1058787 B1 offenbart ein Fundament für eine Windkraftanlage, um offshore Windkraftanlagen zu errichten, die vollständig vormontiert - also inklusive Fundament - transportiert und am Errichtungsort auf den Meeresgrund in einem Stück abgesetzt werden. Das Fundament weist dabei einzelne vorgefertigte Segmente auf. Diese können aus Beton bestehen. Es sind ein flächiger Abschnitt und ein Sockelabschnitt offenbart. Der Sockelabschnitt besteht aus Kreisringen und der flächige Abschnitt besteht aus einzelnen in der Grundfläche trapezförmigen Grundelementen, auf dem ein Sockelabschnitt am inneren Ende vertikal montiert ist, der vertikale Durchgänge aufweist. Die flächigen Grundabschnitte sind mittels Nut-Feder-Verbindungen miteinander verbunden. Der Sockelabschnitt und der flächige Grundabschnitt sind mit einer Diagonalstrebe zur Aussteifung verbunden. Die Kreissegmente des Sockelabschnitts weisen ebenfalls vertikale Durchgänge auf. In die Durchgänge werden Verbindungskabel/Ankerstangen eingebracht. Falls die Fundamentteile aus Beton vorgesehen sind, ist unterhalb der Grundelemente im Bereich der vertikalen Durchgänge ein flacher Widerlagerring aus Stahl vorgesehen. Mit den Verbindungskabel/Ankerstangen wird das Fundament montierten und die Windkraftanlage am Fundament befestigt. Zusätzlich sind horizontale Durchgänge in Grundelementen und Diagonalstreben vorgesehen, in denen ebenfalls horizontale Verbindungskabel/Ankerstangen angeordnet werden, mit denen die Elemente des Fundaments horizontal vorgespannt werden. Erst durch das horizontale Vorspannen wird das Fundament belastbar fertiggestellt. Somit offenbart EP 1 058 787 B1 ein Fundament aus einzelnen vorgefertigten Betonteilen, mit einem Flächenabschnitt und eine Sockelabschnitt, wobei zumindest diese beiden Abschnitte vertikal und horizontal miteinander verbunden werden.

Nachteilig hierbei ist, dass erhebliche Kosten und erheblicher Arbeitsaufwand für Verbinden der Elemente und das Herstellen des statisch belastbaren Fundaments notwendig sind.

EP 1 074 663 A1 offenbart ein Fundament für eine Windkraftanlage mit einem Zentralkörper als Sockel mit daran angeschraubten, sich seitlich erstreckenden, sternförmig angeordneten Rippen/Vorsprüngen/Trägern. Rippen und Mittelkörper werden vor Ort horizontal miteinander verschraubt. Die Teile sind unter anderem aus Beton vorgefertigt und werden mittels LKW zur Baustelle angeliefert, per Kran angeordnet und vor Ort miteinander horizontal über Flansche und Verschraubungen verbunden. Weiterhin sind an der Außenseite der Rippen Anker notwendig, um einen hinreichenden Lastabtrag zu gewährleisten.

Nachteilig hierbei ist, dass auch hier erhebliche Kosten und erheblicher Arbeitsaufwand für Verbinden der Elemente und das Herstellen des statisch belastbaren Fundaments notwendig sind. Weiterhin sind zusätzliche Verankerungen notwendig.

WO 2004/101898 A2 offenbart ein Fundament für eine Windkraftanlage aus vorgefertigten Betoneinzelteilen, wobei entweder ein Zentralkörper vorgesehen ist, an dem Flächenkörper horizontal angeschraubt werden, oder das Fundament besteht ausschließlich aus Bauteilen, die sowohl einen flächigen Abschnitt und einen sockelartigen Abschnitt aufweisen, wobei diese dann horizontal miteinander mittels Verschraubung gegen Flansche verbunden werden.

Nachteilig hierbei ist, dass auch hier erhebliche Kosten und erheblicher Arbeitsaufwand für Verbinden der Elemente und das Herstellen des statisch belastbaren Fundaments notwendig sind.

EP 2182201 A1 offenbart zwei unterschiedliche Fundamente für eine Windkraftanlage. Bei beiden wird aus vorgefertigten Betonteilen nach einer entsprechenden Anlieferung vor Ort ein Fundament errichtet. Beide enthalten einen flächigen Abschnitt und einen sockelartigen Abschnitt. In Variante 1 ist ein Zentralkörper vorgesehen. Die Rippen/Flächenelemente werden an diesen angesetzt. Montiert bilden die Rippen einen polygonalen Körper. Der Zentralkörper weist einen Vorsprung auf, der von einem entsprechenden Rücksprung an den Rippen umgriffen wird. Die Rippen werden zusätzlich mittels eines Zurrrings gegen den Zentralkörper arretiert. An den Flächenköpern sind Ankerstangen zur Montage des Turms vorgesehen. Bei der zweiten Variante weisen die Rippen horizontal vorspringende Ankerelemente auf, die sich im montierten Zustand radial in das Zentrum des Fundaments erstrecken. Unterhalb und oberhalb der Anker sind Platten vorgesehen. In den so gebildeten Hohlraum wird der Ortbeton eingebracht, um die Anker miteinander zu verbinden und einen Zentralkörper zu bilden. Bei beiden Varianten wird das horizontale Verbinden vereinfacht. Allerdings weisen sowohl die Rippen als auch der Zentralkörper Dimensionen und Massen auf, die einen Transport kompliziert gestalten.

WO 2017/141095 A1 und WO 2017/141098 A1 offenbaren ebenfalls ein Fundament für eine Windkraftanlage. Dieses Fundament wird aus vorgefertigten Rippenkörpern gebildet, die an ihrem inneren Ende einen sockelabschnitt aufweisen, auf dem der Turm der Windkraftanlage angeordnet wird. Die Rippen erstrecken sich strahlenförmig nach außen. Die Abschnitte zwischen den Rippen werden in einer weiteren Ausführungsform mit Plattenelementen, die gegen die Rippen mit Flanschen geschraubt werden, zur Herstellung einer Platte gefüllt. Mittig ist anstelle eines Zentralkörpers eine Stahlhülse vorgesehen, die mit im Rippeninneren vorgesehenen Bewehrungen und in inneren Hohlraum vorgesehenen Verstärkungsbalken verbunden ist. Die Rippen weisen eine Grundplatte auf. Auf der ein diagonales Verstärkungselement und der Sockelabschnitt einstückig angeordnet sind. Die Sockelabschnitte sind horizontal über Nut-FederElemente miteinander verbunden. Weiterhin weisen die Sockelabschnitte horizontale Öffnungen auf, in denen Spannelemente zum horizontalen Verbinden der Sockelabschnitte vorgesehen werden. Weiterhin sind in den Sockelabschnitten Ankerstangen für das Verbinden des Turms mit dem Fundament eingegossen. Weiterhin sind ebenfalls außenliegenden Bodenanker offenbart.

Nachteilig hierbei ist, dass auch hier erhebliche Kosten und erheblicher Arbeitsaufwand für Verbinden der Elemente und das Herstellen des statisch belastbaren Fundaments notwendig sind.

Aufgabe der Erfindung ist daher, die vorgenannten Nachteile zu überwinden und Fundamente für Windkraftanlagen aus vorgefertigten Elementen wirtschaftlich errichtbar zu machen.

Gelöst wird dieses durch die verschiedenen vollständig miteinander kombinierbaren nachfolgend dargelegten Lösungen, insbesondere nach dem unabhängigen Patentanspruch 1, sowie den bevorzugten Ausführungsformen gemäß den dazugehörigen Unteransprüchen. Die einzelnen Lösungen sind dabei sich ergänzend, so dass je nach Bodensituation oder Belastungssituation seitens der Windkraftanlage auf das Fundament, einzelne Lösungen mit ihren Merkmalen, eine Kombination einzelner Lösungen mit ihren Merkmalen oder die Gesamtheit der Lösungen mit ihren Merkmalen für ein entsprechendes Fundament Verwendung finden.

Eine erste erfindungsgemäße Lösung sieht dabei vor, dass das wenigstens eine Sockelelement des ersten Abschnitts und die wenigstens zwei Horizontalelemente des zweiten Abschnitts durch die im Wesentlichen vertikalen Vorspannelemente so miteinander vorgespannt sind, dass keine weiteren Befestigungsmittel, insbesondere horizontale Befestigungsmittel, für den Abtrag der Lasten der Windkraftanlage erforderlich sind.

Überraschender Weise hat sich gezeigt, dass es so auf einfache Weise möglich ist, auf horizontale Verbindungsmittel zu verzichten.

Eine weitere Lehre der Erfindung sieht vor, dass unterhalb oder innerhalb des zweiten Abschnitts wenigstens ein Widerlager vorgesehen ist, gegen das die im Wesentlichen vertikalen Verspannelemente angeordnet und gespannt sind, und/oder dass oberhalb oder innerhalb des ersten Abschnitts ein Widerlager vorgesehen ist, gegen das die im Wesentlichen vertikalen Verspannelemente angeordnet und gespannt sind, wobei das obere Widerlager bevorzugt ein Flansch des Turmes der Windkraftanlage ist. Hierdurch wird es auf einfache Weise möglich, eine sichere Ver- bzw. Vorspannung zu gewährleisten.

Eine zweite erfindungsgemäße gleichwertige Lösung sieht dabei vor, dass das geschlossene Sockelelement des ersten Abschnitts aus wenigstens zwei Segmenten zusammengesetzt ist. Hierdurch ist es möglich, einen einfachen Transport auch bei Größen zu ermöglichen, der nur im Sondertransport oder gar nicht möglich wären.

Eine weitere Lehre der Erfindung sieht vor, dass sich die Segmente in einem Verbindungsbereich überlappen, wobei auch die Durchbrüche im Überlappungsbereich überlappen. Hierdurch kann eine einfache und sichere Verbindung bereitgestellt werden.

Eine weitere Lehre der Erfindung sieht vor, dass die Segmente in einem Verbindungsbereich mit im Wesentlichen vertikalen Stoßflächen aneinander Grenzen. Hierdurch kann eine einfache und sichere Verbindung bereitgestellt werden.

Eine weitere Lehre der Erfindung sieht vor, dass in einem Verbindungsbereich im Wesentlichen horizontale Bewehrungselement aus den Segmenten austreten, die sich im Verbindungsbereich überlappen. Hierdurch kann eine einfache und sichere Verbindung bereitgestellt werden.

Eine weitere Lehre der Erfindung sieht vor, dass sich die Segmente im Verbindungsbereich im Hinblick auf die Höhe der Segmente und/oder der Breite der Segmente verjüngen, wobei bevorzugt in den verjüngten Abschnitten Durchbrüche vorgesehen sind. Eine weitere Lehre der Erfindung sieht vor, dass sich die horizontalen Bewehrungselemente in den Verjüngungsabschnitten überlappen. Eine weitere Lehre der Erfindung sieht vor, dass der Verjüngungsbereich mit einem Mörtel verfüllt ist. Überraschender Weise hat sich gezeigt, dass hierdurch beim Vorsehen von Segmenten eine besonders belastbare und kostengünstige Verbindung bereitgestellt wird.

Eine dritte erfindungsgemäße gleichwertige Lösung sieht dabei vor, dass im ersten Abschnitt ein Versteifungselement vorgesehen ist. Es hat sich überraschender Weise gezeigt, dass es durch das Vorsehen eines Versteifungselements insbesondere im Sockelabschnitt möglich ist, auf einfache Weise eine überproportionale Stabilitätserhöhung bei segmentiertem Aufbau des Fundaments im Fundament zu erreichen.

Eine weitere Lehre der Erfindung sieht vor, dass das Versteifungselement keine Durchbrüche aufweist und/oder befestigungsmittelfrei im ersten Abschnitt angeordnet ist. Eine weitere Lehre der Erfindung sieht vor, dass das Versteifungselement als Hülse ausgeführt ist, deren lichter Innendurchmesser im Wesentlichen mit dem lichten Innendurchmesser des ersten und/oder zweiten Abschnitts bevorzugt übereinstimmt.

Eine weitere Lehre der Erfindung sieht vor, dass das Versteifungselement von einem Sockelelement mit im Wesentlichen gleicher oder größerer Höhe umschlossen ist, so dass bevorzugt das umschließende Sockelelement und das Versteifungselement im Wesentlichen die gleiche Wandstärke wie die darüber und/oder darunter angeordneten Sockelelemente aufweisen.

Eine vierte erfindungsgemäße gleichwertige Lösung sieht vor, dass im zweiten Abschnitt ein Versteifungselement vorgesehen ist. Es hat sich überraschender Weise gezeigt, dass es durch das Vorsehen eines Versteifungselements insbesondere im zweiten Abschnitt möglich ist, auf einfache Weise eine überproportionale Stabilitätserhöhung bei segmentiertem Aufbau des Fundaments im Fundament zu erreichen.

Eine weitere Lehre der Erfindung sieht vor, dass das Versteifungselement keine Durchbrüche aufweist und/oder befestigungsmittelfrei im zweiten Abschnitt angeordnet ist. Eine weitere Lehre der Erfindung sieht vor, dass das Versteifungselement als Hülse ausgeführt ist, deren lichter Innendurchmesser im Wesentlichen mit dem lichten Innendurchmesser des ersten und/oder zweiten Abschnitts bevorzugt übereinstimmt.

Eine weitere Lehre der Erfindung sieht vor, dass das Versteifungselement von den Sockelabschnitten der wenigstens zwei Horizontalelemente mit im Wesentlichen gleicher oder größerer Höhe umschlossen ist.

Eine fünfte erfindungsgemäße gleichwertige Lösung sieht vor, dass ein weiterer sich vertikal erstreckender sockelartig ausgeführten Abschnitt vorgesehen ist, der unterhalb des zweiten Abschnitts angeordnet ist und wenigstens ein geschlossenes Sockelelement, bevorzugt hülsenförmig, aufweist, und dass der weitere Abschnitt für den Abtrag der Lasten der Windkraftanlage erforderlich ist. Durch ein Vorsehen eines sockelartigen Abschnitts unterhalb des zweiten Abschnitts kann ebenfalls in überraschender Weise auf einfache Weise die Stabilität des Fundaments überproportional erhöht werden

Eine weitere Lehre der Erfindung sieht vor, dass das geschlossene Sockelelement des weiteren Abschnitts aus wenigstens zwei Segmenten zusammengesetzt ist. Hierdurch ist es möglich, einen einfachen Transport auch bei Größen zu ermöglichen, der nur im Sondertransport oder gar nicht möglich wären.

Eine weitere Lehre der Erfindung sieht vor, dass sich die Segmente in einem Verbindungsbereich überlappen, wobei auch die Durchbrüche im Überlappungsbereich überlappen. Hierdurch kann eine einfache und sichere Verbindung bereitgestellt werden.

Eine weitere Lehre der Erfindung sieht vor, dass die Segmente in einem Verbindungsbereich mit im Wesentlichen vertikalen Stoßflächen aneinander Grenzen. Hierdurch kann eine einfache und sichere Verbindung bereitgestellt werden.

Eine weitere Lehre der Erfindung sieht vor, dass in einem Verbindungsbereich im Wesentlichen horizontale Bewehrungselement aus den Segmenten austreten, die sich im Verbindungsbereich überlappen. Eine weitere Lehre der Erfindung sieht vor, dass sich die Segmente im Verbindungsbereich im Hinblick auf die Höhe der Segmente und/oder der Breite der Segmente verjüngen, wobei bevorzugt in den verjüngten Abschnitten Durchbrüche vorgesehen sind. Eine weitere Lehre der Erfindung sieht vor, dass sich die horizontalen Bewehrungselemente in den Verjüngungsabschnitten überlappen. Eine weitere Lehre der Erfindung sieht vor, dass der Verjüngungsbereich mit einem Mörtel verfüllt ist. Überraschender Weise hat sich gezeigt, dass hierdurch beim Vorsehen von Segmenten eine besonders belastbare und kostengünstige Verbindung bereitgestellt wird.

Eine weitere Lehre der Erfindung in Bezug auf alle Lösungen der Erfindung sieht vor, dass die zwischen den Elementen vertikale und horizontale Fugen vorhanden sind, indem zwischen den Elementen vertikale und/oder horizontale Abstandshalter angeordnet sind. Eine weitere Lehre der Erfindung in Bezug auf alle Lösungen der Erfindung sieht vor, dass vertikale und/oder horizontale Fugen zwischen den Elementen wenigstens teilweise mit einem Mörtel gefüllt sind. Hierdurch wird die Stabilität des Fundaments unterstützt, da die übrigen Maßnahmen mit dem Bereitstellen eine monolithische Verbindung unterstützt werden.

Nachfolgend wird die Erfindung anhand von Ausführungsbeispielen in Verbindung mit einer Zeichnung näher erläutert. Dabei zeigen:
Fig. 1 bis 6b Ansichten und Details zu einer ersten Ausführungsform eines erfindungsgemäßen Fundaments,
Fig. 7 bis 14b Ansichten und Details zu einer zweiten Ausführungsform eines erfindungsgemäßen Fundaments,
Fig. 15 bis 20b Ansichten und Details zu einer dritten Ausführungsform eines erfindungsgemäßen Fundaments, und
Fig. 21 bis 26 Ansichten und Details zu einer vierten Ausführungsform eines erfindungsgemäßen Fundaments.

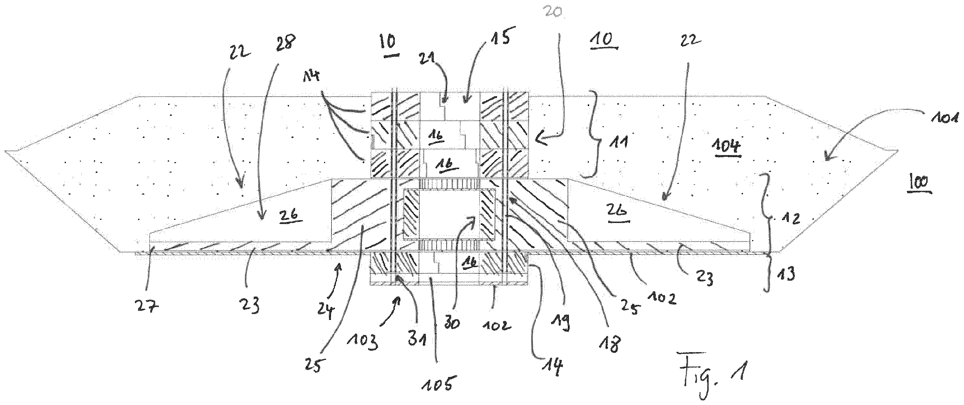

Fig. 1 bis 6b zeigen eine erste Ausführungsform eines erfindungsgemäßen Fundaments 10. Es ist in Fig. 1 in geschnittener Ansicht in einer Grube 101 im Boden 100 auf einer Sauberkeitsschicht 102 angeordnet. Es weist einen ersten Abschnitt 11 und einen zweiten Abschnitt 12 auf. Weiterhin ist auch ein dritter Abschnitt 13 vorgesehen, der in einer Vertiefung 103 vorgesehen ist.

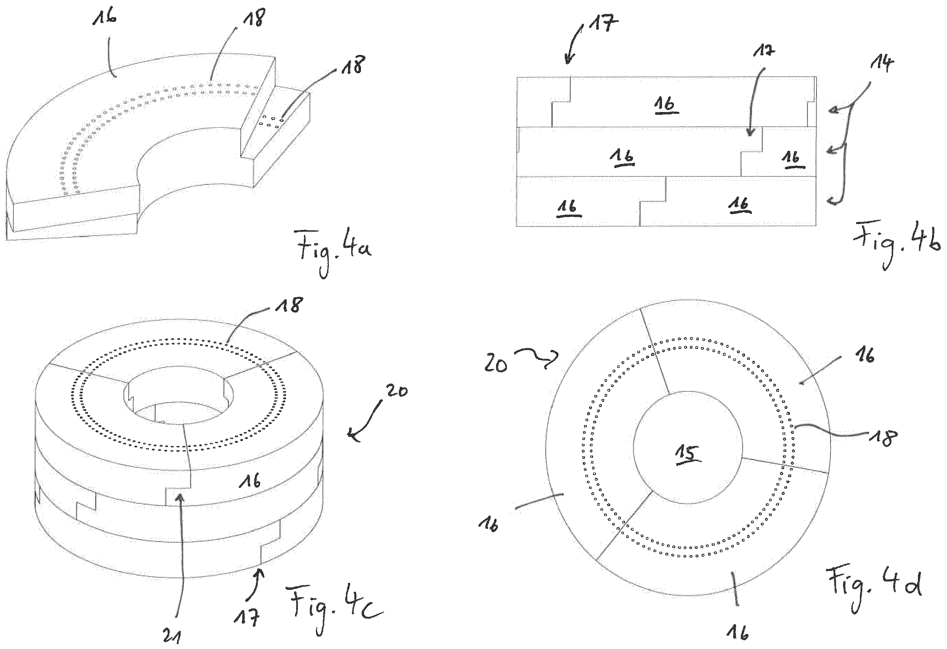

Der erste Abschnitt 11 ist als Sockel 20 aus geschlossenen Sockelelementen 14 aufgebaut (siehe Fig. 4a bis 4d), die hier bevorzugt als Kreisringe ausgeführt sind, so dass der Sockelabschnitt 11 einen Innenraum 15 aufweist. Die Sockelelemente 14 weisen vertikale Durchbrüche 18 auf, in denen nach der Montage des Fundaments 10 Ankerstangen 19 vorgesehen werden, um das Fundament 10 zu verspannen bzw. vorzuspannen.

Die Sockelelemente 14 sind aus Segmenten 16 gebildet. In dieser Ausführungsform weisen die Segmente einen Überlappungsbereich 17 auf, der so realisiert ist, dass Stufenabschnitte 21 vorgesehen sind, die ineinandergreifen. In den Stufenabschnitten 21 sind ebenfalls Durchbrüche 18 vorgesehen, so dass auch in den Stufenabschnitten 21 Ver- bzw. Vorspannung wirkt.

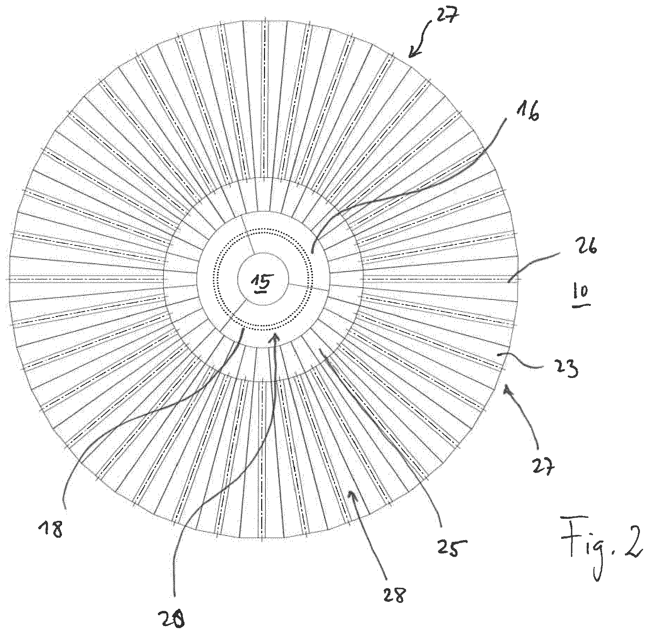

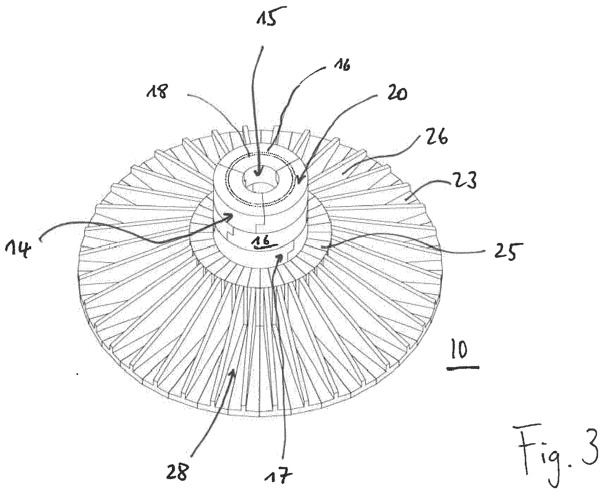

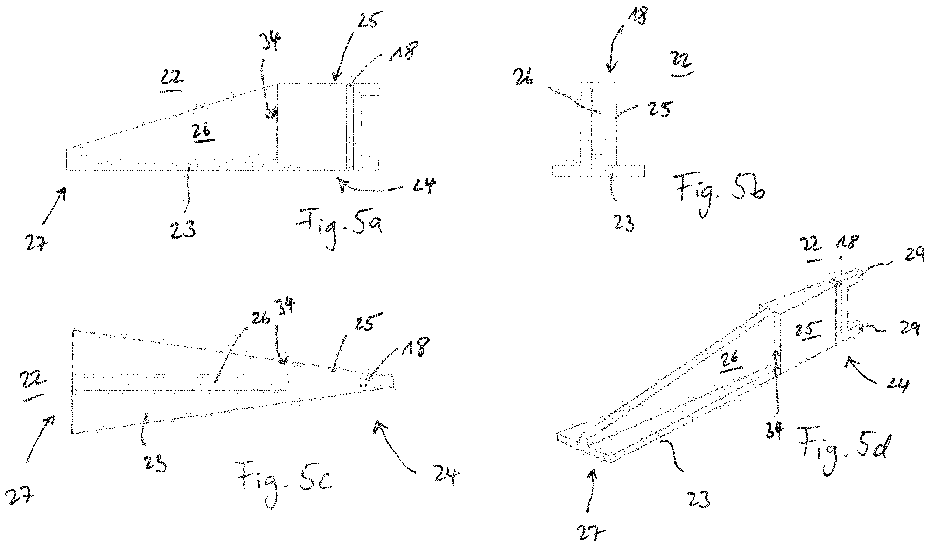

Der zweite Abschnitt 12 ist flächig ausgeführt. Alternativ kann aber auch eine sternform realisiert werden. Eine Draufsicht auf das Fundament 10 ist in Fig. 2 gezeigt. Fig. 3 zeigt eine räumliche Ansicht des Fundaments 10. Der zweite Abschnitt ist aus Horizontalelementen 22 in Form von Rippenelementen ausgeführt. Diese sind in den Fig. 5a bis 5d dargestellt. Diese erstrecken sich vom Innenraum 15 aus gesehen radial nach außen. Sie weisen eine Grundplatte 23 auf, die trapezförmig ausgeführt ist, so dass alle zusammengesetzten Grundplatten eine polygonale Fläche bilden (siehe Fig.2), die sich einer Kreisform annähert.

Am inneren Ende 24 der Grundplatte 23 ist ein Sockelabschnitt 25 vorgesehen, der mit dem Sockel 20 des ersten Abschnitts 11 korrespondiert. Im Sockelabschnitt 25 sind ebenfalls Durchbrüche 18 vorgesehen. Rechtwinklig auf der Grundplatte ist eine Versteifungswand 26 angeordnet, deren Höhe beispielsweise hin zum äußeren Ende 27 der Grundplatte 23 abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

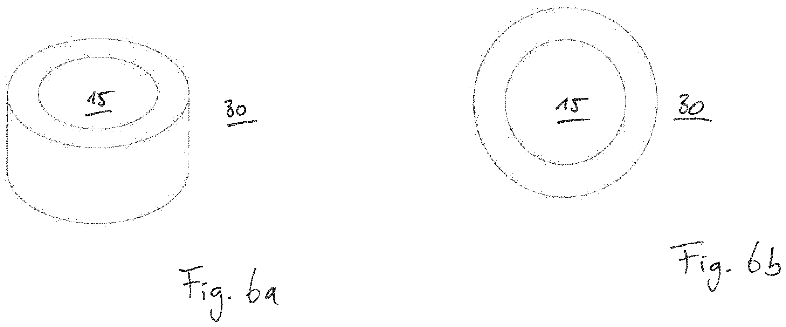

Am inneren Ende 24 Sockelabschnitte 25 der Horizontalelemente 22 sind zwei Vorsprünge 29 vorgesehen, zwischen denen ein Versteifungselement 30 (siehe Fig. 1 und 6a, 6b) anordbar ist. Durch die Vorsprünge wird eine vertikale Bewegung des Versteifungselements 30 vermieden. Diese Vorsprünge 29 sind nur eine mögliche Ausführungsform hierfür. Alternativ können diese auch wegfallen und das Versteifungselement 30, dass dann eine Höhe <= der Höhe des Sockelabschnitts aufweist, wird dann nur lose am inneren Ende 24 des Sockelabschnitts 25 angeordnet. Eine weitere Alternative wäre, dass nur ein Vorsprung 29 oben oder unten am Sockelabschnitt 25 vorgesehen ist.

Das Versteifungselement 30 ist als ein einstückiges Bauteil ausgeführt. Hier ist es bevorzugt als Hülse mit einem Innenraum 15 vorgesehen. Alternativ ist auch ein Vollkörper möglich. Seine Maße sollten dabei bevorzugt so vorgesehen sein, dass es möglich ist, das Versteifungselement 30 mit einem normalen LKW zu transportieren.

Unterhalb des zweiten Abschnitts 12 ist hier bevorzugt ein dritter Abschnitt vorgesehen. Dieser dient ebenfalls zur Versteifung des Fundaments 10. Weiterhin ist er hier auch gleichzeitig ein Widerlager für die Befestigungselemente 31 der Ankerstangen 19. Hier ist ein Sockelelement 14 vorgesehen, das aus Segmenten 16 gebildet ist. Die hier wiederum Überlappungsbereiche 17 und Durchbrüche 18 aufweisen. Alternativ können auch mehrere Sockelelemente 14 vorgesehen werden. Unterhalb des dritten Abschnitts 13 ist ein Hohlraum 105 vorgesehen, in den die Ankerstangen/Gewindestanden 19 bzw. andere Alternative Befestigungsmittel (Kabel etc.) münden und auf die beispielsweise Muttern als Befestigungsmittel 31 in Form von Arretier- und Vorspannmittel aufgeschraubt werden. Aus Korrosionsschutzgründen für die Befestigungsmittel wird der Hohlraum 105 mit Ortbeton verfüllt.

Zwischen den Elementen 14, 16, 22, 30 können Abstandhalter (nicht dargestellt) angeordnet werden, um ein Verfüllen der Fugen mit Mörtel zu ermöglichen/vereinfachen.

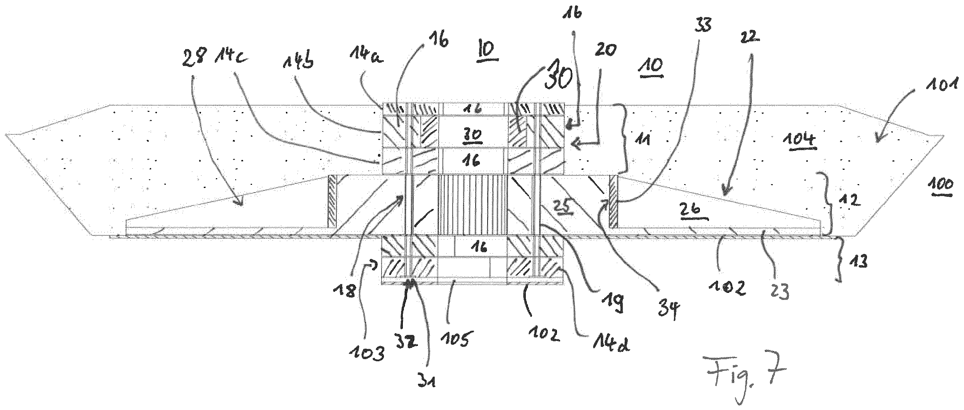

Fig. 7 bis 14b zeigen eine zweite Ausführungsform eines erfindungsgemäßen Fundaments 10. Es ist in Fig. 7 in geschnittener Ansicht in einer Grube 101 im Boden 100 auf einer Sauberkeitsschicht 102 angeordnet. Es weist einen ersten Abschnitt 11 und einen zweiten Abschnitt 12 auf. Weiterhin ist auch ein dritter Abschnitt 13 vorgesehen, der in einer Vertiefung 103 vorgesehen ist.

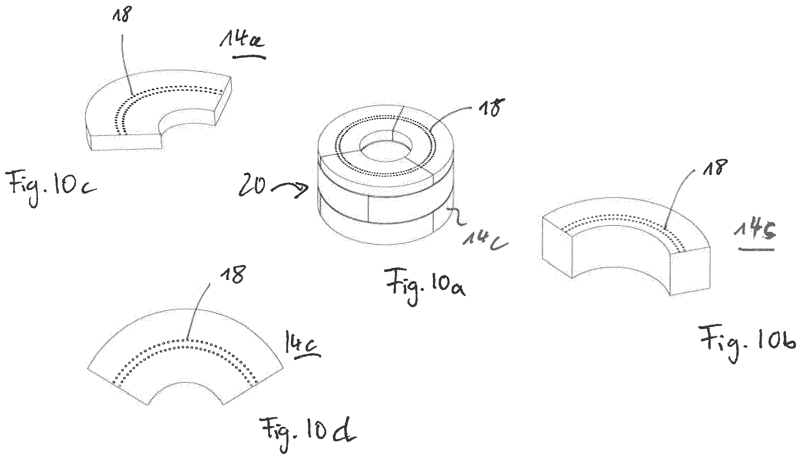

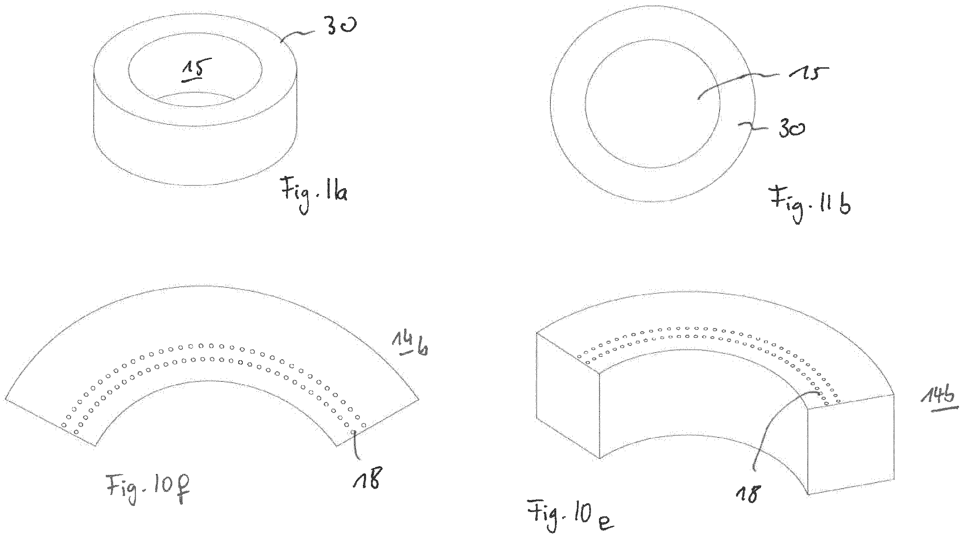

Der erste Abschnitt 11 ist als Sockel 20 aus geschlossenen Sockelelementen 14 aufgebaut (siehe Fig. 10a bis 10f), die hier bevorzugt als Kreisringe ausgeführt sind, so dass der Sockelabschnitt 11 einen Innenraum 15 aufweist. Die Sockelelemente 14 weisen vertikale Durchbrüche 18 auf, in denen nach der Montage des Fundaments 10 Ankerstangen 19 vorgesehen werden, um das Fundament 10 zu verspannen bzw. vorzuspannen. Die Sockelelemente 14 sind aus Segmenten 16 gebildet, die stoßartig zueinander angeordnet sind. Dabei sind unterschiedlich hohe Sockelelement 14a, 14b und 14c beispielhaft hier vorgesehen. Weitere Sockelelemente 14, die auch weitere alternative Höhen aufweisen können, sind möglich. Zuoberst ist ein flaches Widerlagersockelelement 14a vorgesehen. Sockelelement 14b ist höher und weniger breit ausgeführt, so dass in seinem Inneren ein Versteifungselement 30 angeordnet werden kann (siehe Fig. 7). Seine Höhe sollte <= der Höhe des Versteifungselements 30 sein.

Das Versteifungselement 30 (Fig. 11a, 11b) ist als ein einstückiges Bauteil ausgeführt. Hier ist es bevorzugt als Hülse mit einem Innenraum 15 vorgesehen. Alternativ ist auch ein Vollkörper möglich. Seine Maße sollten dabei bevorzugt so vorgesehen sein, dass es möglich ist, das Versteifungselement 30 mit einem normalen LKW zu transportieren.

Als Höhenausgleich bzw. zur Aussteifung ist dann beispielsweise ein weiteres Sockelelement 14c vorgesehen.

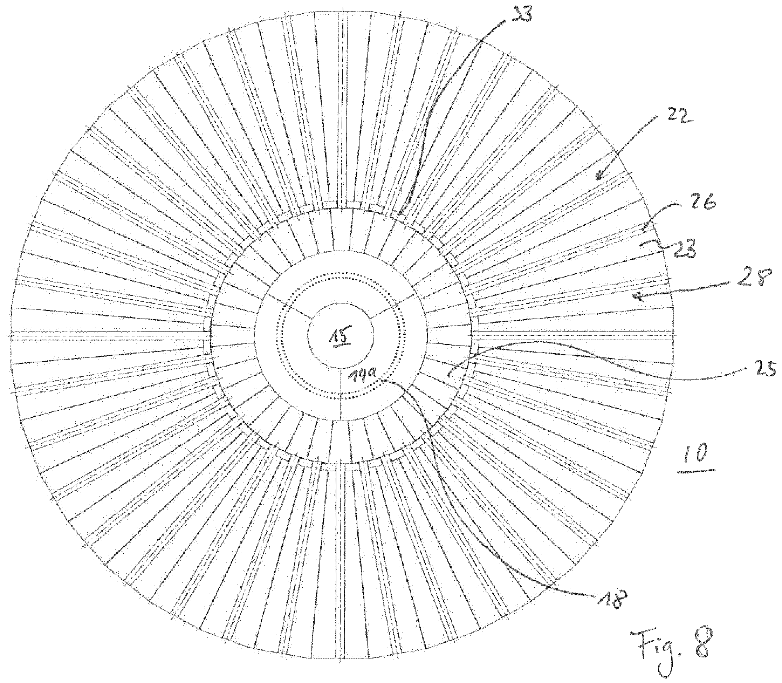

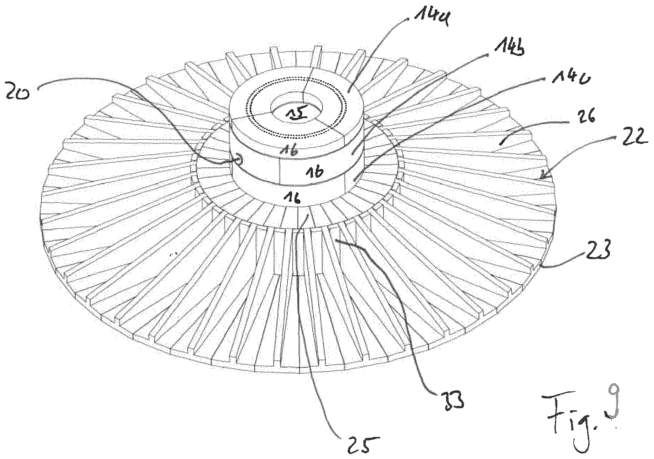

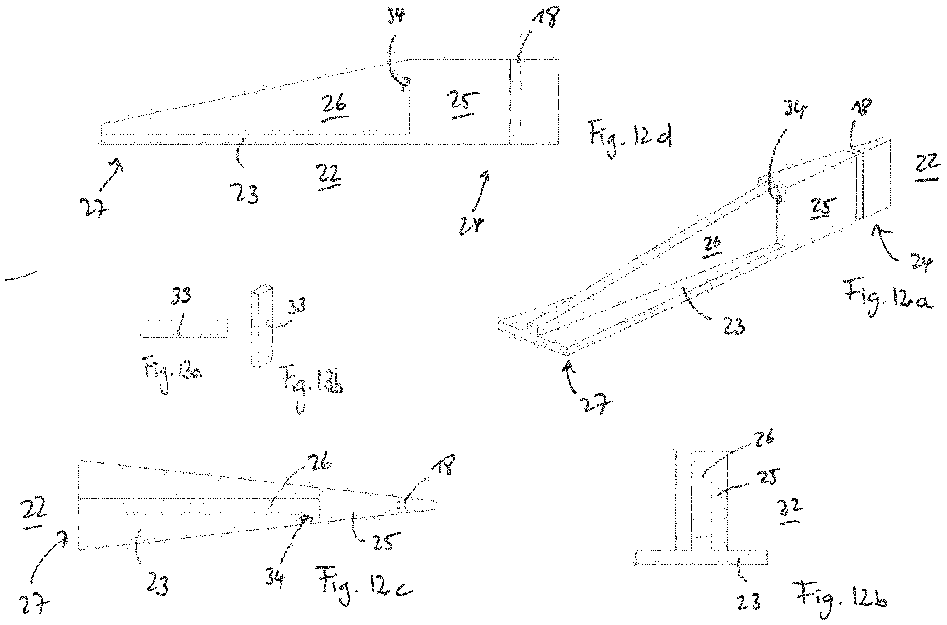

Der zweite Abschnitt 12 ist flächig ausgeführt. Alternativ kann aber auch eine Sternform realisiert werden. Eine Draufsicht auf das Fundament 10 ist in Fig. 8 gezeigt. Fig. 9 zeigt eine räumliche Ansicht des Fundaments 10. Der zweite Abschnitt ist aus Horizontalelementen 22 in Form von Rippenelementen ausgeführt. Diese sind in den Fig. 12a bis 12d dargestellt. Diese erstrecken sich vom Innenraum 15 aus gesehen radial nach außen. Sie weisen eine Grundplatte 23 auf, die trapezförmig ausgeführt ist, so dass alle zusammengesetzten Grundplatten eine polygonale Fläche bilden (siehe Fig.8), die sich einer Kreisform annähert.

Am inneren Ende 24 der Grundplatte 23 ist ein Sockelabschnitt 25 vorgesehen, der mit dem Sockel 20 des ersten Abschnitts 11 korrespondiert. Im Sockelabschnitt 25 sind ebenfalls Durchbrüche 18 vorgesehen. Rechtwinklig auf der Grundplatte ist eine Versteifungswand 26 angeordnet, deren Höhe beispielsweise hin zum äußeren Ende 27 der Grundplatte 23 abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Um den zweiten Abschnitt weiter insbesondere vertikal zu verstärken, können Platten 33 (Siehe Fig. 7 und Fig. 13a, 13b) an den äußeren Enden 34 der Sockelabschnitte 25 vorgesehen sein, die beispielsweise gegen den Sockelabschnitt vermörtelt werden. Diese Platten 33 erstrecken sich zwischen zwei Versteifungswänden 26 zweier benachbarter Horizontalelemente 22. Weiterhin erstrecken sie sich bevorzugt bis auf die Grundplatte 23 und schließen oben bündig mit dem Sockelabschnitt 25 ab.

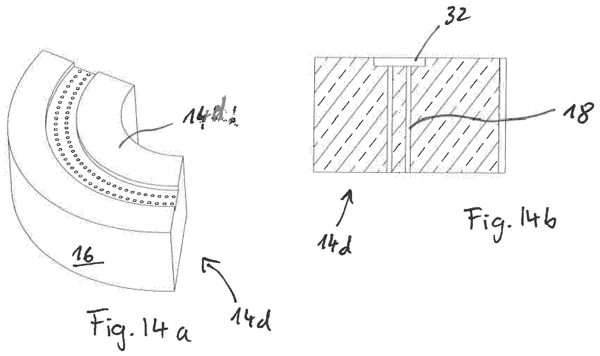

Unterhalb des zweiten Abschnitts 12 ist hier bevorzugt ein dritter Abschnitt 13 vorgesehen. Dieser dient ebenfalls zur Versteifung des Fundaments 10. Weiterhin ist er hier auch gleichzeitig mit seinem untersten Sockelelement 14d ein Widerlager (siehe auch Fig. 14a, 14b) für die Befestigungselemente 31 der Ankerstangen 19. Hier sind beispielsweise zwei Sockelelement 14 vorgesehen, die aus Segmenten 16 gebildet ist, die hier wiederum stoßartig angeordnet sind. Alternativ können auch weitere Sockelelemente 14 vorgesehen werden. Im untersten Sockelelement 14d ist eine Vertiefung 32 vorgesehen, in die die Befestigungselement 31 eingreifen können, oder in denen Widerlagerelemente (nicht dargestellt) angeordnet werden können.

Unterhalb des dritten Abschnitts 13 ist ein Hohlraum 105 vorgesehen, in den die Ankerstangen/Gewindestanden 19 bzw. andere Alternative Befestigungsmittel (Kabel etc.) münden und auf die beispielsweise Muttern als Befestigungsmittel 31 in Form von Arretier- und Vorspannmittel aufgeschraubt werden. Aus Korrosionsschutzgründen für die Befestigungsmittel wird der Hohlraum 105 mit Ortbeton verfüllt.

Zwischen den Elementen 14, 16, 22, 30 können Abstandhalter (nicht dargestellt) angeordnet werden, um ein Verfüllen der Fugen mit Mörtel zu ermöglichen/vereinfachen.

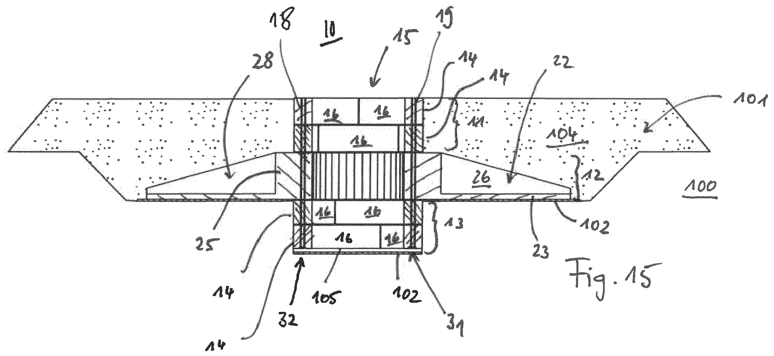

Fig. 15 bis 20b zeigen eine dritte Ausführungsform eines erfindungsgemäßen Fundaments 10. Es ist in Fig. 15 in geschnittener Ansicht in einer Grube 101 im Boden 100 auf einer Sauberkeitsschicht 102 angeordnet. Es weist einen ersten Abschnitt 11 und einen zweiten Abschnitt 12 auf. Weiterhin ist auch ein dritter Abschnitt 13 vorgesehen, der in einer Vertiefung 103 vorgesehen ist.

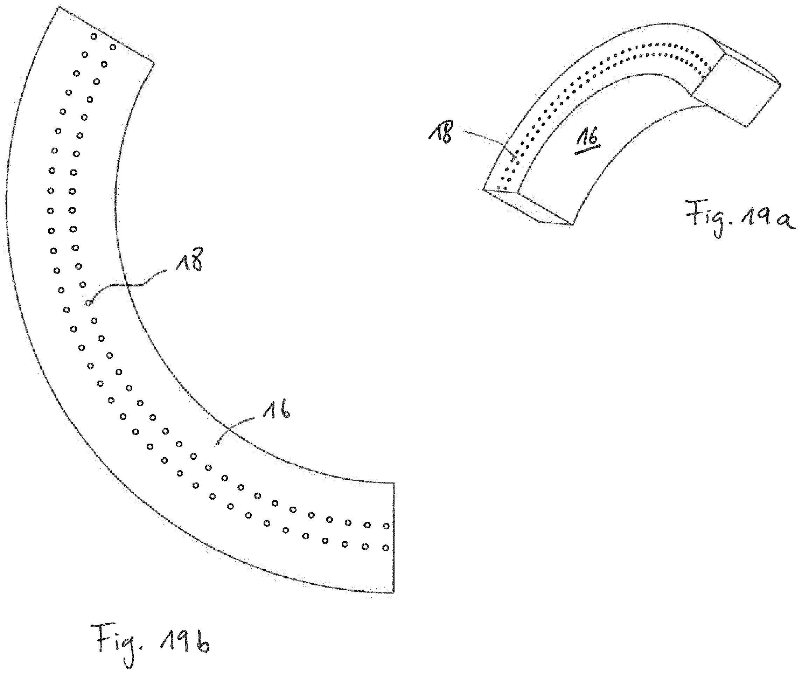

Der erste Abschnitt 11 ist als Sockel 20 aus geschlossenen Sockelelementen 14 aufgebaut, die hier bevorzugt als Kreisringe ausgeführt sind, so dass der Sockelabschnitt 11 einen Innenraum 15 aufweist. Die Sockelelemente 14 weisen vertikale Durchbrüche 18 auf, in denen nach der Montage des Fundaments 10 Ankerstangen 19 vorgesehen werden, um das Fundament 10 zu verspannen bzw. vorzuspannen. Die Sockelelemente 14 sind aus Segmenten 16 (siehe Fig. 19a, 19b) gebildet, die stoßartig zueinander angeordnet sind.

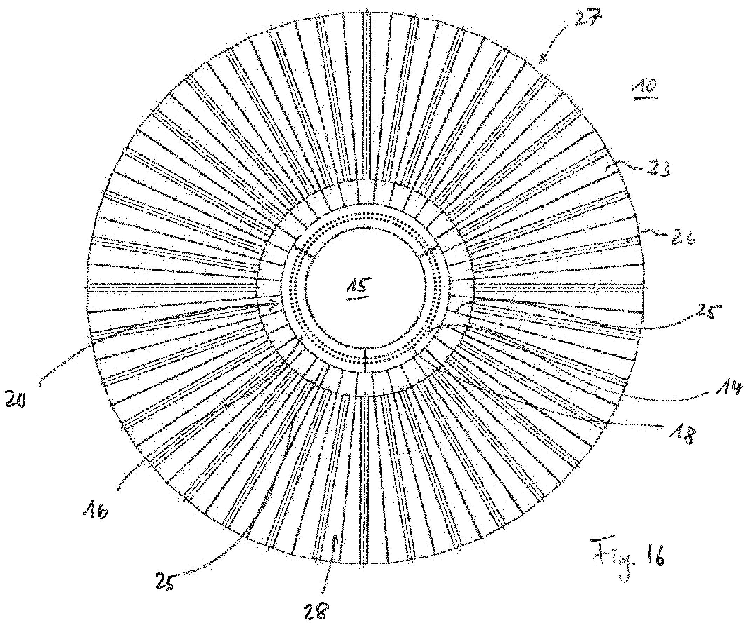

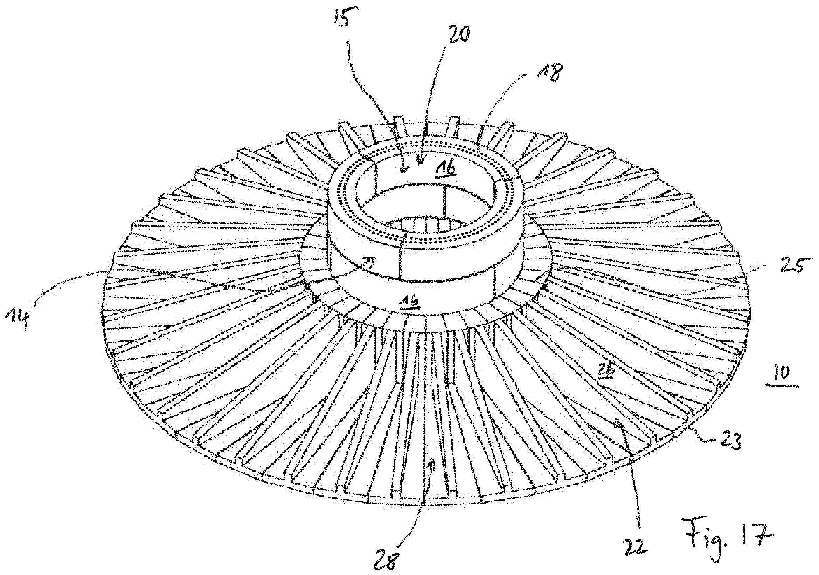

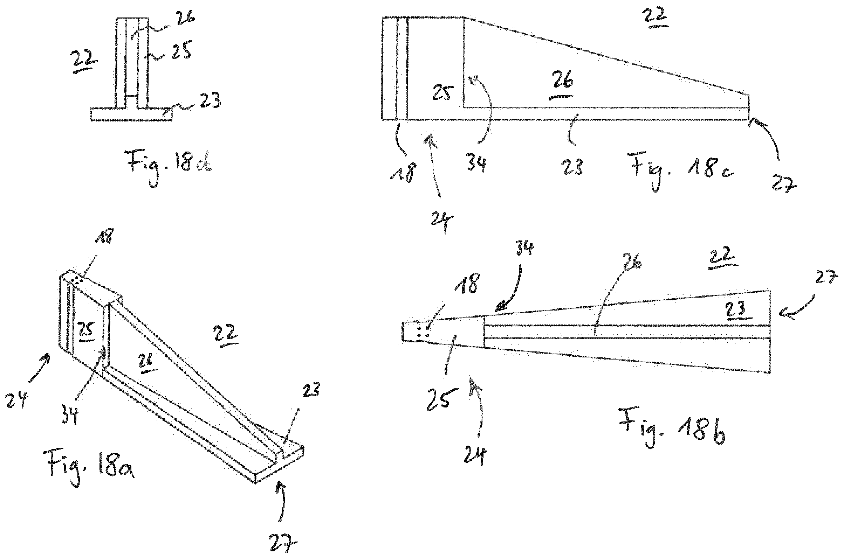

Der zweite Abschnitt 12 ist flächig ausgeführt. Alternativ kann aber auch eine Sternform realisiert werden. Eine Draufsicht auf das Fundament 10 ist in Fig. 16 gezeigt. Fig. 17 zeigt eine räumliche Ansicht des Fundaments 10. Der zweite Abschnitt 12 ist aus Horizontalelementen 22 in Form von Rippenelementen ausgeführt. Diese sind in den Fig. 18a bis 18d dargestellt. Diese erstrecken sich vom Innenraum 15 aus gesehen radial nach außen. Sie weisen eine Grundplatte 23 auf, die trapezförmig ausgeführt ist, so dass alle zusammengesetzten Grundplatten eine polygonale Fläche bilden (siehe Fig.16), die sich einer Kreisform annähert.

Am inneren Ende 24 der Grundplatte 23 ist ein Sockelabschnitt 25 vorgesehen, der mit dem Sockel 20 des ersten Abschnitts 11 korrespondiert. Im Sockelabschnitt 25 sind ebenfalls Durchbrüche 18 vorgesehen. Rechtwinklig auf der Grundplatte ist eine Versteifungswand 26 angeordnet, deren Höhe hin zum äußeren Ende 27 der Grundplatte 23 beispielsweise abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Unterhalb des zweiten Abschnitts 12 ist hier bevorzugt ein dritter Abschnitt 13 vorgesehen. Dieser dient zur Versteifung des Fundaments 10. Es hat sich gezeigt, dass es möglich ist, insbesondere bei großen Sockeldurchmessern, lediglich den dritten Abschnitt 13 vorzusehen, um einen hinreichenden Lastabtrag zu erreichen.

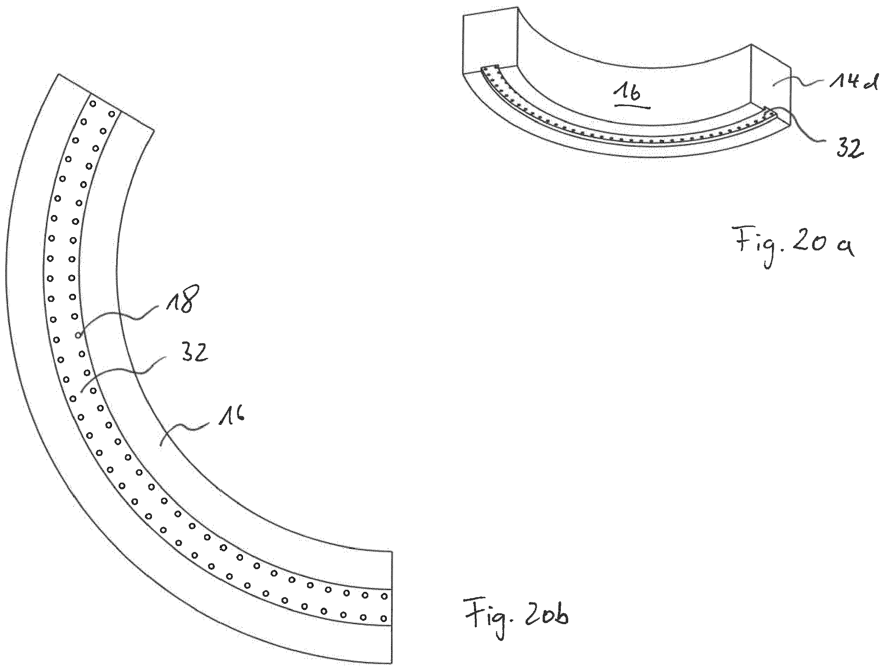

Weiterhin ist der dritte Abschnitt 13 hier auch gleichzeitig mit seinem untersten Sockelelement 14d ein Widerlager (siehe auch Fig. 20a, 20b) für die Befestigungselemente 31 der Ankerstangen 19. Hier sind beispielsweise zwei Sockelelement 14 vorgesehen, die aus Segmenten 16 gebildet ist, die hier wiederum stoßartig angeordnet sind. Alternativ können auch weitere Sockelelemente 14 vorgesehen werden. Im untersten Sockelelement 14d ist eine Vertiefung 32 vorgesehen, in die die Befestigungselement 31 eingreifen können, oder in denen Widerlagerelemente (nicht dargestellt) angeordnet werden können.

Unterhalb des dritten Abschnitts 13 ist ein Hohlraum 105 vorgesehen, in den die Ankerstangen/Gewindestanden 19 bzw. andere Alternative Befestigungsmittel (Kabel etc.) münden und auf die beispielsweise Muttern als Befestigungsmittel 31 in Form von Arretier- und Vorspannmittel aufgeschraubt werden. Aus Korrosionsschutzgründen für die Befestigungsmittel wird der Hohlraum 105 mit Ortbeton verfüllt.

Zwischen den Elementen 14, 16, 22, 30 können Abstandhalter (nicht dargestellt) angeordnet werden, um ein Verfüllen der Fugen mit Mörtel zu ermöglichen/vereinfachen.

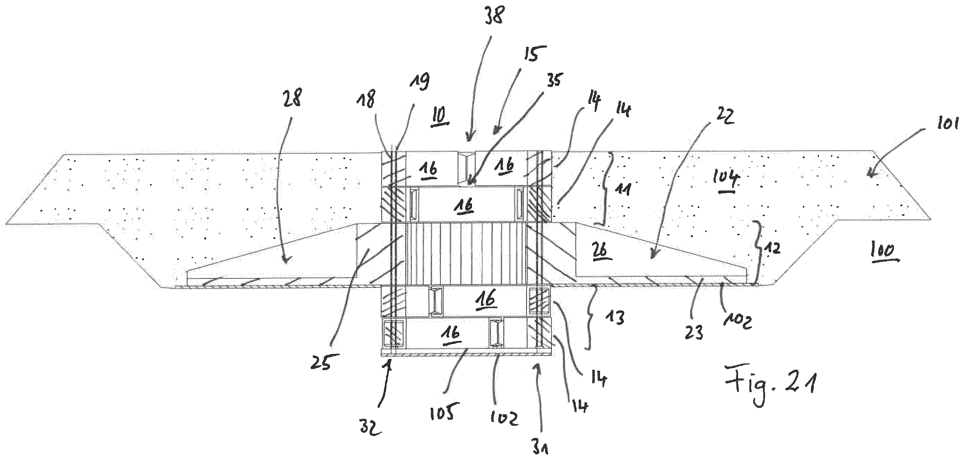

Fig. 21 bis 26 zeigen eine vierte Ausführungsform eines erfindungsgemäßen Fundaments 10 ähnlich der dritten Ausführungsform. Es ist in Fig. 21 in geschnittener Ansicht in einer Grube 101 im Boden 100 auf einer Sauberkeitsschicht 102 angeordnet. Es weist einen ersten Abschnitt 11 und einen zweiten Abschnitt 12 auf. Weiterhin ist auch ein dritter Abschnitt 13 vorgesehen, der in einer Vertiefung 103 vorgesehen ist.

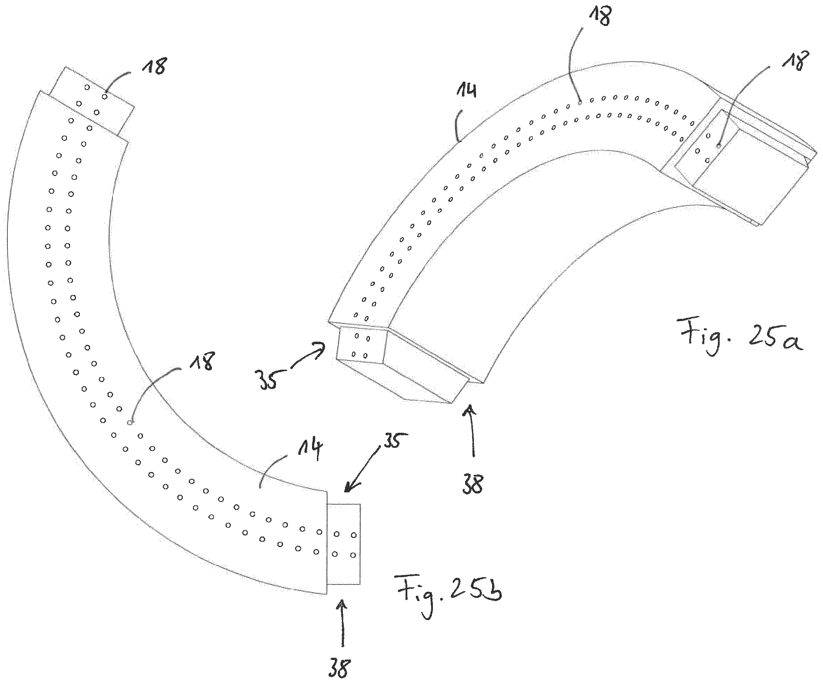

Der erste Abschnitt 11 ist als Sockel 20 aus geschlossenen Sockelelementen 14 aufgebaut, die hier bevorzugt als Kreisringe ausgeführt sind, so dass der Sockelabschnitt 11 einen Innenraum 15 aufweist. Die Sockelelemente 14 weisen vertikale Durchbrüche 18 auf, in denen nach der Montage des Fundaments 10 Ankerstangen 19 vorgesehen werden, um das Fundament 10 zu verspannen bzw. vorzuspannen. Die Sockelelemente 14 sind aus Segmenten 16 (siehe Fig. 25a, 25b) gebildet, die stoßartig zueinander angeordnet sind.

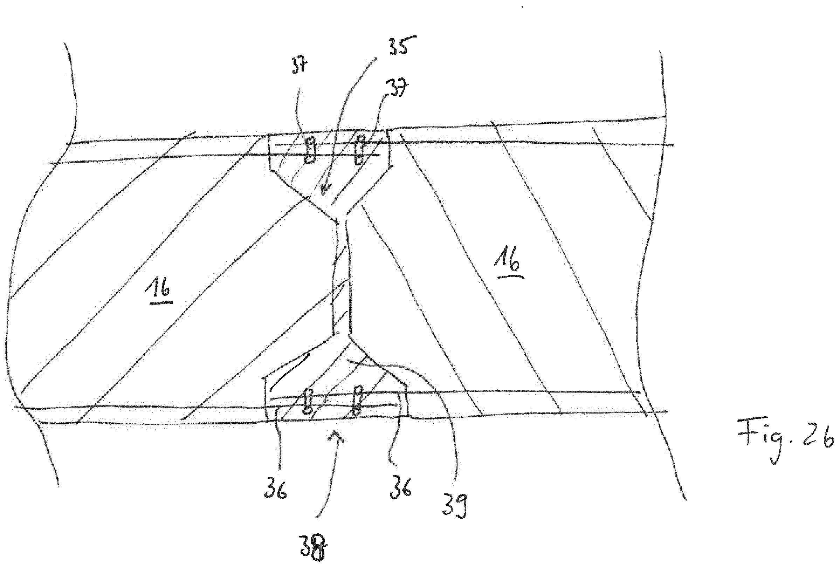

Eine besonders bevorzugte Verbindung der Segmente 16 ist in Fig. 26 dargestellt. Die Segmente sind stoßartig zueinander angeordnet. Allerdings verjüngen sich die Segmente 16 in einem Verbindungsbereich 38. Im Verjüngungsbereich 35 treten Bewehrungselement 36 horizontal aus den Segmenten 16 heraus. Im zur Montage angeordneten Zustand fluchten die Bewehrungselemente 36 der benachbarten Segmente 16 und übergreifen sich im Verbindungsbereich 38/Verjüngungsbereich 35. Diese werden mit Verbindungsmitteln 37 miteinander verbunden, die in Fig. 26 lediglich schematisch dargestellt sind. Auch in den Verjüngungsbereichen 35 weisen die Segmente 16 Durchbrüche 18 auf (siehe Fig. 25a, 25b), die allerdings in Fig. 26 nicht dargestellt sind. Die Verjüngungsbereiche 35 werden nach dem Verbinden der Bewehrungselemente 36 mit Mörtel 39 aufgefüllt, wodurch die Segmente zusätzlich monolithisch/stoffschlüssig miteinander verbunden werden, was zu einer besonders stabilen Verbindung der Segmente 16 führt. Besonders vorteilhaft ist dabei, dass der Übergreifungsbereich bedingt durch das Vorsehen der Verjüngungen deutlich kürzer ausfallen kann. Weiterhin wird die benötigte Menge an Mörtel 39 erheblich reduziert. Dieses macht den Einsatz von schneller bindenden Mörteln wirtschaftlich, wodurch Fundamentmontage schneller durchgeführt werden kann.

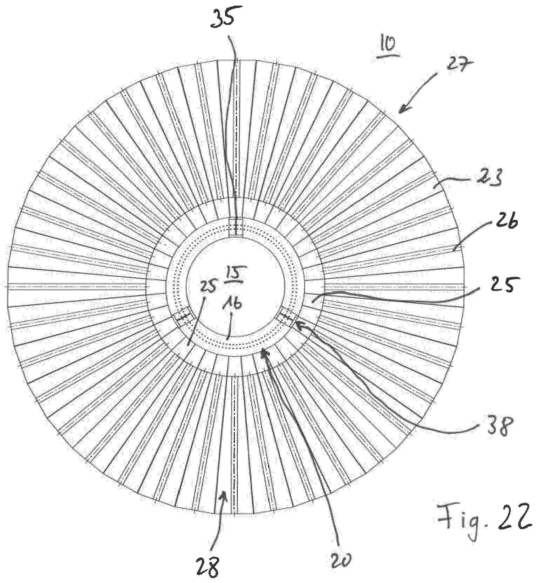

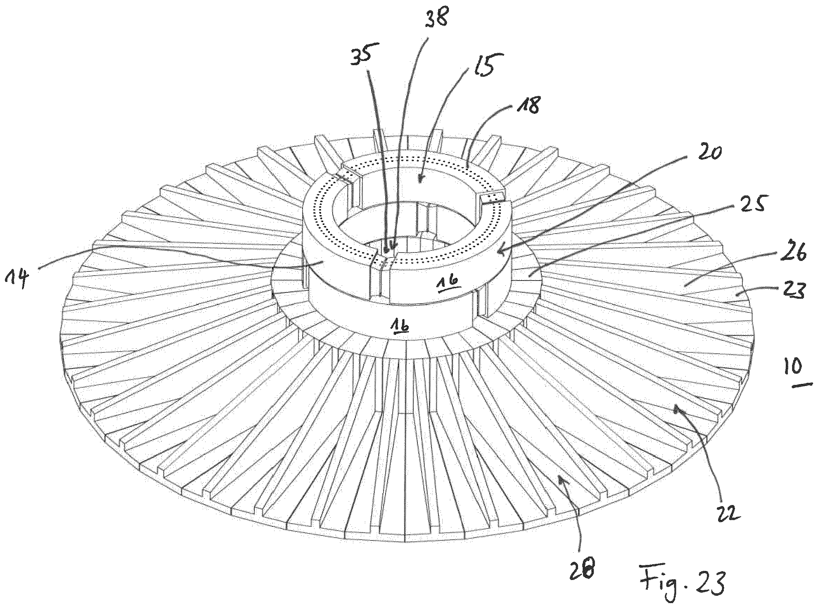

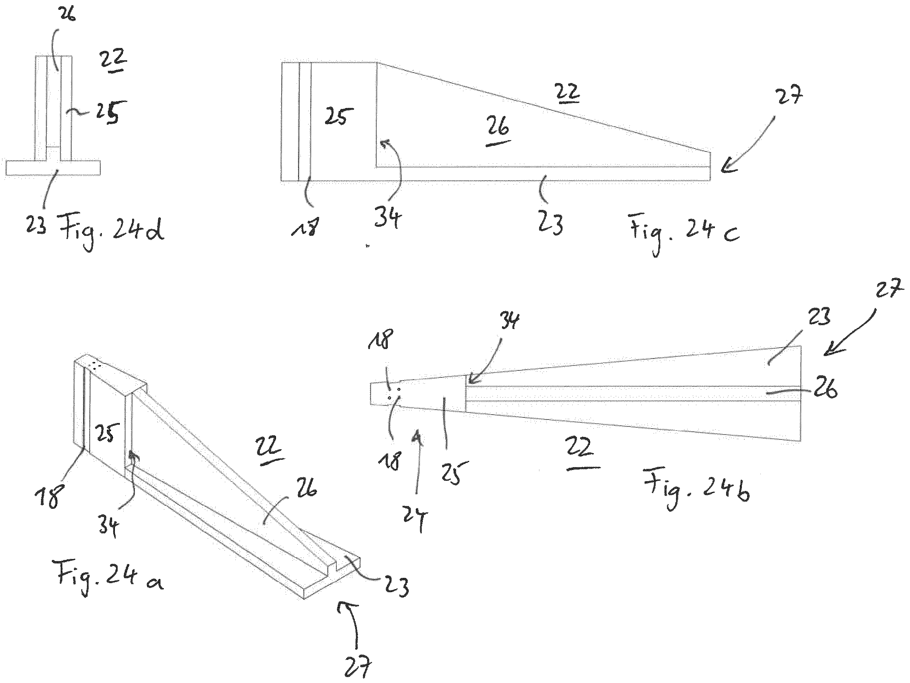

Der zweite Abschnitt 12 ist flächig ausgeführt. Alternativ kann aber auch eine Sternform realisiert werden. Eine Draufsicht auf das Fundament 10 ist in Fig. 22 gezeigt. Fig. 23 zeigt eine räumliche Ansicht des Fundaments 10. Der zweite Abschnitt 12 ist aus Horizontalelementen 22 in Form von Rippenelementen ausgeführt. Diese sind in den Fig. 24a bis 24d dargestellt. Diese erstrecken sich vom Innenraum 15 aus gesehen radial nach außen. Sie weisen eine Grundplatte 23 auf, die trapezförmig ausgeführt ist, so dass alle zusammengesetzten Grundplatten eine polygonale Fläche bilden (siehe Fig. 22), die sich einer Kreisform annähert.

Am inneren Ende 24 der Grundplatte 23 ist ein Sockelabschnitt 25 vorgesehen, der mit dem Sockel 20 des ersten Abschnitts 11 korrespondiert. Im Sockelabschnitt 25 sind ebenfalls Durchbrüche 18 vorgesehen. Rechtwinklig auf der Grundplatte ist eine Versteifungswand 26 angeordnet, deren Höhe hin zum äußeren Ende 27 der Grundplatte 23 beispielsweise abnimmt. Zwischen zwei benachbarten Versteifungswänden 26 bildet sich ein nach oben offener Hohlraum 28, in den Aufschüttboden 104 einbringbar ist, wodurch eine Auflast auf den zweiten Abschnitt 12 des Fundaments 10 aufbringbar ist.

Unterhalb des zweiten Abschnitts 12 ist hier bevorzugt ein dritter Abschnitt 13 vorgesehen. Dieser dient zur Versteifung des Fundaments 10. Es hat sich gezeigt, dass es möglich ist, insbesondere bei großen Sockeldurchmessern, lediglich den dritten Abschnitt 13 vorzusehen, um einen hinreichenden Lastabtrag zu erreichen.

Weiterhin ist der dritte Abschnitt 13 hier auch gleichzeitig mit seinem untersten Sockelelement 14d ein Widerlager für die Befestigungselemente 31 der Ankerstangen 19. Hier sind beispielsweise zwei Sockelelement 14 vorgesehen, die aus Segmenten 16 gebildet ist, die hier wiederum stoßartig angeordnet sind. Alternativ können auch weitere Sockelelemente 14 vorgesehen werden. Im untersten Sockelelement 14d ist eine Vertiefung 32 vorgesehen, in die die Befestigungselement 31 eingreifen können, oder in denen Widerlagerelemente (nicht dargestellt) angeordnet werden können.

Unterhalb des dritten Abschnitts 13 ist ein Hohlraum 105 vorgesehen, in den die Ankerstangen/Gewindestanden 19 bzw. andere Alternative Befestigungsmittel (Kabel etc.) münden und auf die beispielsweise Muttern als Befestigungsmittel 31 in Form von Arretier- und Vorspannmittel aufgeschraubt werden. Aus Korrosionsschutzgründen für die Befestigungsmittel wird der Hohlraum 105 mit Ortbeton verfüllt.

Zwischen den Elementen 14, 16, 22, 30 können Abstandhalter (nicht dargestellt) angeordnet werden, um ein Verfüllen der Fugen mit Mörtel zu ermöglichen/vereinfachen.

Nachfolgend sind weitere bevorzugte Ausführungsbeispiele dargelegt:
1. Fundament für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, und einem zweiten sich im Wesentlichen horizontal erstreckenden Abschnitt als Fundamentkörper, der sich in Kontakt mit dem Boden befindet, wobei der erste Abschnitt oberhalb des zweiten Abschnitts angeordnet ist und wenigstens ein geschlossenes Sockelelement, bevorzugt hülsenförmig, aufweist, das ringförmig oder polygonal ausgeführt ist, und wobei der zweite Abschnitt aus wenigstens zwei Horizontalelementen gebildet ist, die jeweils wenigstens einen Sockelabschnitt aufweisen, wobei das wenigstens eine Sockelelement des ersten Abschnitts und der Sockelabschnitt des Horizontalelements des zweiten Abschnitts im Wesentlichen vertikale Durchbrüche aufweisen, die montiert miteinander fluchten, in denen im Wesentlichen vertikale Verspannelemente, bevorzugt Gewindestangen, angeordnet sind, **dadurch gekennzeichnet, dass** das wenigstens eine Sockelelement des ersten Abschnitts und die wenigstens zwei Horizontalelemente des zweiten Abschnitts durch die im Wesentlichen vertikalen Vorspannelemente so miteinander vorgespannt sind, dass keine weiteren Befestigungsmittel, insbesondere horizontale Befestigungsmittel, für den Abtrag der Lasten der Windkraftanlage erforderlich sind.
2. Fundament für eine Windkraftanlage nach Ausführungsbeispiel 1, **dadurch gekennzeichnet, dass** unterhalb oder innerhalb des zweiten Abschnitts wenigstens ein Widerlager vorgesehen ist, gegen das die im Wesentlichen vertikalen Verspannelemente angeordnet und gespannt sind, und/oder dass oberhalb oder innerhalb des ersten Abschnitts ein Widerlager vorgesehen ist, gegen das die im Wesentlichen vertikalen Verspannelemente angeordnet und gespannt sind, wobei das obere Widerlager bevorzugt ein Flansch des Turmes der Windkraftanlage ist.
3. Fundament für eine Windkraftanlage nach Ausführungsbeispiel 1 oder 2 verbunden mit den Merkmalen der Ausführungsbeispiele 4 bis 30.
4. Fundament für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, und einem zweiten sich im Wesentlichen horizontal erstreckenden Abschnitt als Fundamentkörper, der sich in Kontakt mit dem Boden befindet, wobei der erste Abschnitt oberhalb des zweiten Abschnitts angeordnet ist und wenigstens ein geschlossenes Sockelelement, bevorzugt hülsenförmig, aufweist, das ringförmig oder polygonal ausgeführt ist, und wobei der zweite Abschnitt aus wenigstens zwei Horizontalelementen gebildet ist, die jeweils wenigstens einen Sockelabschnitt aufweisen, wobei das wenigstens eine Sockelelement des ersten Abschnitts und der Sockelabschnitt des Horizontalelements des zweiten Abschnitts im Wesentlichen vertikale Durchbrüche aufweisen, die montiert miteinander fluchten, in denen im Wesentlichen vertikale Verspannelemente, bevorzugt Gewindestangen, angeordnet sind, **dadurch gekennzeichnet, dass** das geschlossene Sockelelement des ersten Abschnitts aus wenigstens zwei Segmenten zusammengesetzt ist.
5. Fundament für eine Windkraftanlage nach Ausführungsbeispiel 4, **dadurch gekennzeichnet, dass** sich die Segmente in einem Verbindungsbereich überlappen, wobei auch die Durchbrüche im Überlappungsbereich überlappen.
6. Fundament für eine Windkraftanlage nach Ausführungsbeispiel 5, **dadurch gekennzeichnet, dass** die Segmente in einem Verbindungsbereich mit im Wesentlichen vertikalen Stoßflächen aneinander Grenzen.
7. Fundament für eine Windkraftanlage nach einem der Ausführungsbeispiele 4 bis 6, **dadurch gekennzeichnet, dass** in einem Verbindungsbereich im Wesentlichen horizontale Bewehrungselement aus den Segmenten austreten, die sich im Verbindungsbereich überlappen.
8. Fundament für eine Windkraftanlage nach einem der Ausführungsbeispiele 4 bis 7, **dadurch gekennzeichnet, dass** sich die Segmente im Verbindungsbereich im Hinblick auf die Höhe der Segmente und/oder der Breite der Segmente verjüngen, wobei bevorzugt in den verjüngten Abschnitten Durchbrüche vorgesehen sind.
9. Fundament für eine Windkraftanlage nach Ausführungsbeispiel 8, **dadurch gekennzeichnet, dass** sich die horizontalen Bewehrungselemente in den Verjüngungsabschnitten überlappen.
10. Fundament für eine Windkraftanlage nach Ausführungsbeispiel 8 oder 9, **dadurch gekennzeichnet, dass** der Verjüngungsbereich mit einem Mörtel verfüllt ist.
11. Fundament für eine Windkraftanlage nach einem der Ausführungsbeispiele 4 bis 7 verbunden mit den Merkmalen der Ausführungsbeispiele 1 oder 2 sowie 12 bis 30.
12. Fundament für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, und einem zweiten sich im Wesentlichen horizontal erstreckenden Abschnitt als Fundamentkörper, der sich in Kontakt mit dem Boden befindet, wobei der erste Abschnitt oberhalb des zweiten Abschnitts angeordnet ist und wenigstens ein geschlossenes Sockelelement, bevorzugt hülsenförmig, aufweist, das ringförmig oder polygonal ausgeführt ist, und wobei der zweite Abschnitt aus wenigstens zwei Horizontalelementen gebildet ist, die jeweils wenigstens einen Sockelabschnitt aufweisen, wobei das wenigstens eine Sockelelement des ersten Abschnitts und der Sockelabschnitt des Horizontalelements des zweiten Abschnitts im Wesentlichen vertikale Durchbrüche aufweisen, die montiert miteinander fluchten, in denen im Wesentlichen vertikale Verspannelemente, bevorzugt Gewindestangen, angeordnet sind, **dadurch gekennzeichnet, dass** im ersten Abschnitt ein Versteifungselement vorgesehen ist.
13. Fundament für eine Windkraftanlage nach Ausführungsbeispiel 12, **dadurch gekennzeichnet, dass** das Versteifungselement keine Durchbrüche aufweist und/oder befestigungsmittelfrei im ersten Abschnitt angeordnet ist.
14. Fundament für eine Windkraftanlage nach Ausführungsbeispiel 12 oder 13, **dadurch gekennzeichnet, dass** das Versteifungselement als Hülse ausgeführt ist, deren lichter Innendurchmesser im Wesentlichen mit dem lichten Innendurchmesser des ersten und/oder zweiten Abschnitts bevorzugt übereinstimmt.
15. Fundament für eine Windkraftanlage nach einem der Ausführungsbeispiele 12 bis 14, **dadurch gekennzeichnet, dass** das Versteifungselement von einem Sockelelement mit im Wesentlichen gleicher oder größerer Höhe umschlossen ist, so dass bevorzugt das umschließende Sockelelement und das Versteifungselement im Wesentlichen die gleiche Wandstärke wie die darüber und/oder darunter angeordneten Sockelelemente aufweisen.
16. Fundament für eine Windkraftanlage nach einem der Ausführungsbeispiele 12 bis 15 verbunden mit den Merkmalen der Ausführungsbeispiele 1 bis 11 sowie 17 bis 30.
17. Fundament für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, und einem zweiten sich im Wesentlichen horizontal erstreckenden Abschnitt als Fundamentkörper, der sich in Kontakt mit dem Boden befindet, wobei der erste Abschnitt oberhalb des zweiten Abschnitts angeordnet ist und wenigstens ein geschlossenes Sockelelement, bevorzugt hülsenförmig, aufweist, das ringförmig oder polygonal ausgeführt ist, und wobei der zweite Abschnitt aus wenigstens zwei Horizontalelementen gebildet ist, die jeweils wenigstens einen Sockelabschnitt aufweisen, wobei das wenigstens eine Sockelelement des ersten Abschnitts und der Sockelabschnitt des Horizontalelements des zweiten Abschnitts im Wesentlichen vertikale Durchbrüche aufweisen, die montiert miteinander fluchten, in denen im Wesentlichen vertikale Verspannelemente, bevorzugt Gewindestangen, angeordnet sind, **dadurch gekennzeichnet, dass** im zweiten Abschnitt ein Versteifungselement vorgesehen ist.
18. Fundament für eine Windkraftanlage nach Ausführungsbeispiel 17, **dadurch gekennzeichnet, dass** das Versteifungselement keine Durchbrüche aufweist und/oder befestigungsmittelfrei im zweiten Abschnitt angeordnet ist.
19. Fundament für eine Windkraftanlage nach Ausführungsbeispiel 17 oder 18, **dadurch gekennzeichnet, dass** das Versteifungselement als Hülse ausgeführt ist, deren lichter Innendurchmesser im Wesentlichen mit dem lichten Innendurchmesser des ersten und/oder zweiten Abschnitts bevorzugt übereinstimmt.
20. Fundament für eine Windkraftanlage nach einem der Ausführungsbeispiele 16 bis 19, **dadurch gekennzeichnet, dass** das Versteifungselement von den Sockelabschnitten der wenigstens zwei Horizontalelementen mit im Wesentlichen gleicher oder größerer Höhe umschlossen ist.
21. Fundament für eine Windkraftanlage nach einem der Ausführungsbeispiele 17 bis 20 verbunden mit den Merkmalen der Ausführungsbeispiele 1 bis 16 sowie 22 bis 30.
22. Fundament für eine Windkraftanlage, wobei das Fundament im Wesentlichen vorgefertigte Elemente, bevorzugt aus bewehrtem Beton, aufweist, mit einem ersten, sich vertikal erstreckenden sockelartig ausgeführten Abschnitt, auf dem ein Turm der Windkraftanlage anordbar ist, und einem zweiten sich im Wesentlichen horizontal erstreckenden Abschnitt als Fundamentkörper, der sich in Kontakt mit dem Boden befindet, wobei der erste Abschnitt oberhalb des zweiten Abschnitts angeordnet ist und wenigstens ein geschlossenes Sockelelement, bevorzugt hülsenförmig, aufweist, das ringförmig oder polygonal ausgeführt ist, und wobei der zweite Abschnitt aus wenigstens zwei Horizontalelementen gebildet ist, die jeweils wenigstens einen Sockelabschnitt aufweisen, wobei das wenigstens eine Sockelelement des ersten Abschnitts und der Sockelabschnitt des Horizontalelements des zweiten Abschnitts im Wesentlichen vertikale Durchbrüche aufweisen, die montiert miteinander fluchten, in denen im Wesentlichen vertikale Verspannelemente, bevorzugt Gewindestangen, angeordnet sind, **dadurch gekennzeichnet, dass** ein weiterer sich vertikal erstreckender sockelartig ausgeführten Abschnitt vorgesehen ist, der unterhalb des zweiten Abschnitts angeordnet ist und wenigstens ein geschlossenes Sockelelement, bevorzugt hülsenförmig, aufweist, und dass der weitere Abschnitt für den Abtrag der Lasten der Windkraftanlage erforderlich ist.
23. Fundament für eine Windkraftanlage nach Ausführungsbeispiel 22, **dadurch gekennzeichnet, dass** das geschlossene Sockelelement des weiteren Abschnitts aus wenigstens zwei Segmenten zusammengesetzt ist.
24. Fundament für eine Windkraftanlage nach Ausführungsbeispiel 23, **dadurch gekennzeichnet, dass** sich die Segmente in einem Verbindungsbereich überlappen, wobei auch die Durchbrüche im Überlappungsbereich überlappen.
25. Fundament für eine Windkraftanlage nach Ausführungsbeispiel 23, **dadurch gekennzeichnet, dass** die Segmente in einem Verbindungsbereich mit im Wesentlichen vertikalen Stoßflächen aneinander Grenzen.
26. Fundament für eine Windkraftanlage nach einem der Ausführungsbeispiele 22 bis 25, **dadurch gekennzeichnet, dass** in einem Verbindungsbereich im Wesentlichen horizontale Bewehrungselement aus den Segmenten austreten, die sich im Verbindungsbereich überlappen.
27. Fundament für eine Windkraftanlage nach einem der Ausführungsbeispiele 22 bis 26, **dadurch gekennzeichnet, dass** sich die Segmente im Verbindungsbereich im Hinblick auf die Höhe der Segmente und/oder der Breite der Segmente verjüngen, wobei bevorzugt in den verjüngten Abschnitten Durchbrüche vorgesehen sind.
28. Fundament für eine Windkraftanlage nach Ausführungsbeispiel 27, **dadurch gekennzeichnet, dass** sich die horizontalen Bewehrungselemente in den Verjüngungsabschnitten überlappen.
29. Fundament für eine Windkraftanlage nach Ausführungsbeispiel 27 oder 28, **dadurch gekennzeichnet, dass** der Verjüngungsbereich mit einem Mörtel verfüllt ist.
30. Fundament für eine Windkraftanlage nach einem der Ausführungsbeispiele 22 bis 29 verbunden mit den Merkmalen der Ausführungsbeispiele 1 bis 21.
31. Fundament für eine Windkraftanlage nach einem der Ausführungsbeispiele 1 bis 30, **dadurch gekennzeichnet, dass** die zwischen den Elementen vertikale und horizontale Fugen vorhanden sind, indem zwischen den Elementen vertikale und/oder horizontale Abstandshalter angeordnet sind.
32. Fundament für eine Windkraftanlage nach einem der Ausführungsbeispiele 1 bis 31, **dadurch gekennzeichnet, dass** vertikale und/oder horizontale Fugen zwischen den Elementen wenigstens teilweise mit einem Mörtel gefüllt sind.

**Bezugszeichenliste**

| | | | |
|---|---|---|---|
| 10 | Fundament | 39 | Mörtel |
| 11 | erster Abschnitt /Sockelabschnitt | 100 | Boden |
| 12 | zweiter Abschnitt | 101 | Baugrube |
| 13 | dritter Abschnitt | 102 | Sauberkeitsschicht |
| 14 | Sockelelement | 103 | Vertiefung |
| 14a | Widerlagersockelelement | 104 | Aufschüttboden |
| 15 | Innenraum | 105 | Hohlraum |
| 16 | Segment | | |
| 17 | Überlappungsbereich | | |
| 18 | Durchbruch | | |
| 19 | Ankerstangen | | |
| 20 | Sockel | | |
| 21 | Stufenabschnitt | | |
| 22 | Horizontalelement/ Rippenelement | | |
| 23 | Grundplatte | | |
| 24 | Inneres Ende | | |
| 25 | Sockelabschnitt | | |
| 26 | Versteifungswand | | |
| 27 | äußeres Ende | | |
| 28 | Hohlraum | | |
| 29 | Vorsprung | | |
| 30 | Versteifungselement | | |
| 31 | Befestigungselement | | |
| 32 | Vertiefung | | |
| 33 | Platte | | |
| 34 | äußeres Ende | | |
| 35 | Verjüngungsbereich | | |
| 36 | Bewehrungselement | | |
| 37 | Verbindungsmittel | | |
| 38 | Verbindungsbereich | | |

## Patentansprüche

1. Fundament für eine Windkraftanlage, wobei das Fundament (10) im Wesentlichen vorgefertigte Elemente aufweist, mit einem ersten, sich vertikal erstreckenden sockelartig ausgeführten Abschnitt (11), auf dem ein Turm der Windkraftanlage anordbar ist, und einem zweiten sich im Wesentlichen horizontal erstreckenden Abschnitt (12) als Fundamentkörper, der sich in Kontakt mit dem Boden (100) befindet, wobei der erste Abschnitt (11) oberhalb des zweiten Abschnitts (12) angeordnet ist und wenigstens ein geschlossenes Sockelelement (14) aufweist, das ringförmig oder polygonal ausgeführt ist, und wobei der zweite Abschnitt (12) aus wenigstens zwei Horizontalelementen (22) gebildet ist, die jeweils wenigstens einen Sockelabschnitt (25) aufweisen, wobei das wenigstens eine Sockelelement (14) des ersten Abschnitts (11) und der Sockelabschnitt (25) des Horizontalelements (22) des zweiten Abschnitts (12) im Wesentlichen vertikale Durchbrüche (18) aufweisen, die montiert miteinander fluchten, in denen im Wesentlichen vertikale Verspannelemente (19) angeordnet sind, **dadurch gekennzeichnet, dass** ein weiterer sich vertikal erstreckender sockelartig ausgeführten Abschnitt (13) vorgesehen ist, der unterhalb des zweiten Abschnitts (12) angeordnet ist und wenigstens ein geschlossenes Sockelelement (14) aufweist, und dass der weitere Abschnitt (13) für den Abtrag der Lasten der Windkraftanlage erforderlich ist.

2. Fundament für eine Windkraftanlage nach Anspruch 1, **dadurch gekennzeichnet, dass** das wenigstens eine Sockelelement (14) des ersten Abschnitts (14) und die wenigstens zwei Horizontalelemente (22) des zweiten Abschnitts (12) durch die im Wesentlichen vertikalen Vorspannelemente (19) miteinander vorgespannt sind.

3. Fundament für eine Windkraftanlage nach Anspruch 1 oder 2, **dadurch gekennzeichnet, dass** das geschlossene Sockelelement (14) des ersten Abschnitts (11) und/oder des weiteren Abschnitts (13) aus wenigstens zwei Segmenten (16) zusammengesetzt ist.

4. Fundament für eine Windkraftanlage nach einem der Ansprüche 1 bis 3, **dadurch gekennzeichnet, dass** unterhalb oder innerhalb des zweiten Abschnitts (12) oder weiteren Abschnitts (13) wenigstens ein Widerlager (14a) vorgesehen ist, gegen das die im Wesentlichen vertikalen Verspannelemente (19) angeordnet und gespannt sind, und/oder dass oberhalb oder innerhalb des ersten Abschnitts (11) ein Widerlager vorgesehen ist, gegen das die im Wesentlichen vertikalen Verspannelemente (19) angeordnet und gespannt sind.

5. Fundament für eine Windkraftanlage nach Anspruch 3 oder 4, **dadurch gekennzeichnet, dass** sich die Segmente (16) des ersten Abschnitts (11) und/oder des weiteren Abschnitts (13) in einem Verbindungsbereich (38) überlappen, wobei auch die Durchbrüche (18) im Überlappungsbereich überlappen.

6. Fundament für eine Windkraftanlage nach einem der Ansprüche 3 bis 5, **dadurch gekennzeichnet, dass** die Segmente (16) des ersten Abschnitts (11) und/oder des weiteren Abschnitts (13) in einem Verbindungsbereich (38) mit im Wesentlichen vertikalen Stoßflächen aneinander Grenzen.

7. Fundament für eine Windkraftanlage nach einem der Ansprüche 3 bis 6, **dadurch gekennzeichnet, dass** in einem Verbindungsbereich (38) im Wesentlichen horizontale Bewehrungselement (36) aus den Segmenten (16) austreten, die sich im Verbindungsbereich (38) überlappen.

8. Fundament für eine Windkraftanlage nach einem der Ansprüche 3 bis 7, **dadurch gekennzeichnet, dass** sich die Segmente (16) des ersten Abschnitts (11) und/oder des weiteren Abschnitts (13) im Verbindungsbereich (38) im Hinblick auf die Höhe der Segmente (16) und/oder der Breite der Segmente (16) verjüngen.

9. Fundament für eine Windkraftanlage nach Anspruch 8, **dadurch gekennzeichnet, dass** sich die horizontalen Bewehrungselemente (36) in den Verjüngungsabschnitten (35) überlappen.

10. Fundament für eine Windkraftanlage nach Anspruch 8 oder 9, **dadurch gekennzeichnet, dass** der Verjüngungsbereich mit einem Mörtel (39) verfüllt ist.

11. Fundament für eine Windkraftanlage nach einem der Ansprüche 1 bis 10, **dadurch gekennzeichnet, dass** im ersten Abschnitt (11) und/oder im zweiten Abschnitt (12) ein Versteifungselement (30) vorgesehen ist.

12. Fundament für eine Windkraftanlage nach Anspruch 11, **dadurch gekennzeichnet, dass** das Versteifungselement (30) keine Durchbrüche aufweist und/oder befestigungsmittelfrei im ersten oder zweiten Abschnitt (11, 12) angeordnet ist.

13. Fundament für eine Windkraftanlage nach Anspruch 11 oder 12, **dadurch gekennzeichnet, dass** das Versteifungselement (30) als Hülse ausgeführt ist, deren lichter Innendurchmesser im Wesentlichen mit dem lichten Innendurchmesser des ersten und/oder zweiten Abschnitts (11, 12) übereinstimmt.

14. Fundament für eine Windkraftanlage nach einem der Ansprüche 11 bis 13, **dadurch gekennzeichnet, dass** das Versteifungselement (30) von einem Sockelelement (14) mit im Wesentlichen gleicher oder größerer Höhe umschlossen ist, so dass das umschließende Sockelelement (14) und das Versteifungselement (30) im Wesentlichen die gleiche Wandstärke wie die darüber und/oder darunter angeordneten Sockelelemente aufweisen und/oder das Versteifungselement (30) von den Sockelabschnitten der wenigstens zwei Horizontalelemente (22) mit im Wesentlichen gleicher oder größerer Höhe umschlossen ist.

15. Fundament für eine Windkraftanlage nach einem der Ansprüche 2 bis 14, **dadurch gekennzeichnet, dass** keine weiteren horizontale Befestigungsmittel für den Abtrag der Lasten der Windkraftanlage erforderlich sind.
